(19) Europäisches Patentamt
European Patent Office
Office européen des brevets

(11) Publication number: **0 201 152 A2**

(12) # EUROPEAN PATENT APPLICATION

(21) Application number: **86300212.7**

(22) Date of filing: **14.01.86**

(51) Int. Cl.[4]: **B 01 J 29/10**, C 10 G 11/05

(30) Priority: **14.01.85 US 691245**

(43) Date of publication of application: **12.11.86 Bulletin 86/46**

(84) Designated Contracting States: **AT BE CH DE FR GB IT LI LU NL SE**

(71) Applicant: **ENGELHARD CORPORATION, 70 Wood Avenue South CN 770, Iselin New Jersey 08830 (US)**

(72) Inventor: **Martins, Evon, 351 Colonial Road, Somerville New Jersey (US)**
Inventor: **Durante, Vincent Anthony, 37 Clearview Road, East Brunswick New Jersey (US)**
Inventor: **Tiethof, Jack A., 1275 Rock Avenue, West Plainfield New Jersey (US)**

(74) Representative: **Geering, Keith Edwin et al, REDDIE & GROSE 16 Theobalds Road, London WC1X 8PL (GB)**

(54) **Fluidizable cracking catalyst composition.**

(57) A fluidizable catalyst composition for fluid catalytic cracking of hydrocarbon fractions, the composition comprising (a) zeolitic particles of relatively high catalytic activity and comprising Y-faujasite in a matrix containing at least a portion of silica-alumina and (b) alumina-based additive particles which are relatively inert towards catalytic cracking and comprise calcium oxide/alumina particles to act as a vanadium immobilization agent, the zeolitic particles after steam treatment in a fluidized bed reactor at 1450°F for four hours using 90 volume % flowing steam plus 10% air atmosphere displaying a weight percent conversion of at least 70% when tested using the feedstock of Table III in the microactivity test of ASTM D.3907–80, the reactor being operated at 910°F, the catalyst to oil weight ratio being 5, and the weight hourly space velocity being $15h^{-}$. The composition resists degeneration due to vanadium contaminant in the hydrocarbon feed.

EP 0 201 152 A2

ACTORUM AG

FLUIDIZABLE CRACKING CATALYST COMPOSITION

Zeolites have revolutionized petroleum refining. The uniform cells of hydrothermally stable acidic zeolites are excellent sites for selectively catalytically cracking high boiling, long chain hydrocarbon fractions to more valuable, low boiling, hydrocarbons. Relatively small amounts of zeolites can transform the older amorphous silica alumina cracking catalysts into catalysts with greatly improved activity and selectivity. Unfortunately, zeolites are only metastable and the regular network of uniform cells can collapse into an inactive amorphous mass if the zeolite containing catalyst is mistreated. The "stability" of zeolites, i.e. their resistance to collapse of the crystalline structure can be improved by replacing sodium cations in the zeolitic structure with other more desirable cations such as rare earth ions or ammonium ions. For example, rare earth exchanged Y-faujasite is a relatively "stable" zeolite which is widely used in fluid catalytic cracking catalysts. Typically, the rare earths used in the ion exchange process are derived from naturally occurring mixtures such as those found in monazite or bastnaezite sands.

However, even though the rare earth exchanged faujasites have improved hydrothermal stability, they remain susceptible to the pernicious effects of vanadium compounds, which reportedly precipitate collapse of the zeolitic cell structure by the formation of a low melting eutectic. Newer high activity zeolitic catalysts have been developed which are capable of tolerating significant amounts of vanadium, usually up to about 5 wt. ppm, such as is typically found in conventional feedstocks to FCC units. However, in many cases, refiners need the ability to crack feedstocks containing residual oils

which often are contaminated with from about 20 to about 400 ppm by weight of vanadium. Even the most metals tolerant of these catalysts have difficulty with vanadium at these levels. Further, it is sometimes desirable to mix particulate additives with these high activity catalysts to adjust their activity levels. However, it has been discovered that, in many cases, the particulate additive detracts from the inherent vanadium resistance of the catalysts.

A recent breakthrough in fluid catalytic cracking technology has provided highly active catalysts containing larger proportions of rare earth exchanged Y-faujasite with correspondingly reduced proportions of silica-alumina matrix and reduced microporosity. These new catalysts are described in allowed U.S. Patent Application 06/469,765 (EP 117545A) to which reference is directed. The microspheres of these catalysts exhibit substantial tolerance to metals such as vanadium and nickel. However, the activities of new high activity catalysts are so great that in many applications, it will be desirable to blend the catalyst particles with relatively catalytically inert additive particles. For many applications, especially those with feedstocks containing up to about 5 ppm vanadium by weight, the nature of the additive is not particularly critical; for applications in which large amounts of metal are contained in the feed, it has been found that the affinity for vanadium of many additives is unexpectedly low relative to that of the zeolitic component, and thus, vanadium may migrate from the additive to the zeolite, resulting in concentration of vanadium on the zeolitic component. It has been discovered that accelerated deactivation is associated with migration of vanadium originally deposited on the additive particles to the zeolitic particles. In particular, it appears that this vanadium which migrates from the additive to the zeolite (but less so from the

zeolite to the additive) results in accelerated deactivation of the catalyst. Operating conditions of the FCC Unit influence the rate and extent of this redistribution. For example, extensive redistribution is achieved when the partial pressures of steam and oxygen in the regenerator are substantial. It appears that a vanadium species in the +5 oxidation state is both the predominant migrating species and also the species primarily responsible for the destruction of zeolite and thus, operating conditions which promote formation of this species result in both catalyst deactivation in the absence of additive and enhanced migration of vanadium from the additive to the zeolitic component in the presence of vanadium.

It has been found that this problem may be alleviated by use of a particulate additive comprising microspheres of rare earth or calcium oxide and calcined kaolin clay having a BET surface area of e.g. at most about 20 $m^2/g$, and a microporosity of e.g. about 0.02 to about 0.06 cc/g. Preferably, most of the particles are between 20 and 150 microns in diameter. In one desirable embodiment, microspheres of calcined kaolin clay are impregnated with an aqueous solution containing precursors of calcium or rare earth oxides and the precursors are converted to the respective oxides by calcining. Suitable calcined kaolin microspheres can be formed by methods known to the prior art. For example, such microspheres can be made by spray drying an aqueous slurry of hydrous kaolin containing small amounts of tetrasodium pyrophosphate to form microspheres of hydrous kaolin then calcining the microspheres at least substantially through the characteristic exotherm without any substantial formation of mullite. Mixtures of kaolin or calcined kaolin with other clays including bentonite and attapulgite can also be used. After impregnation with the salts, calcination for a time and at a temperature sufficient to generate rare earth and/or calcium oxides

is carried out, or the microspheres may be optionally dried only.

The present invention provides a fluidizable catalyst composition for fluid catalytic cracking of hydrocarbon fractions, the composition comprising [a] zeolitic particles of relatively high catalytic activity and comprising Y-faujasite in a matrix containing at least a portion of silica-alumina and [b] alumina-based additive particles which are relatively inert towards catalytic cracking and comprise calcium oxide/alumina particles to act as a vanadium immobilization agent. Preferably the zeolitic particles include at least 20%, e.g. at least 40%, by weight Y-faujasite and have a microporosity of no more than 0.2 cc/g. The composition preferably contains from 20 to 90 wt.% of the additive particles and from 10 to 80 wt.% of the zeolitic particles. The invention is particularly applicable when the zeolitic particles, after steam treatment in a fluidized bed reactor at 1450°F for four hours using 90 volume % flowing steam plus 10% air atmosphere, display a weight percent conversion of at least 70% when tested using the feedstock of Table III in the microactivity test of ASTM D.3907-80, the reactor being operated at 910°F, the catalyst to oil weight ratio being 5, and the weight hourly space velocity being $15h^{-1}$.

Both rare earth and calcium oxide impregnated microspheres immobilize the vanadium on the additive particles, but catalysts containing calcium oxide coated microspheres seem to offer surprisingly attenuated coke production. It is hypothesized that calcium oxide not only immobilizes vanadium but also passivates nickel compounds. Calcium salts impregnated onto calcined alumina particles of prescribed area seem to similarly both immobilize vanadium and passivate nickel. In contrast to the results obtained with clay based microspheres, it has been observed that desirable surface areas of the calcium oxide bearing alumina particles may range up to about 100 $m^2/g$, with surface areas of less than about 80 $m^2/g$ being preferred. To provide a desirable compromise between selectivity and vanadium immobilization characteristics, we prefer that the area of the calcium bearing alumina be from about 30 $m^2/g$ to about 60 $m^2/g$. In contrast to substantially pure alumina of comparable surface area, it should be noted that calcium oxide bearing alumina with a surface area in this 30 to 60 $m^2/g$ range provides <u>both</u> good selectivity and good vanadium immobilization while substantially pure aluminas exhibit degraded selectivity with the higher surface areas and attenuated vanadium immobilization with the lower surface areas.

It is extremely desirable that the surface area of the clay based additive not exceed about 20 $m^2/g$ since additives with higher surface areas, such as those suggested in prior art for control of oxides of sulfur, particularly alumina, can severely degrade the overall selectivity of the cracking process by promoting non-selective cracking leading to formation of undesirable amounts of coke and light gases at the expense of desired products. While the additives used in the present

invention can help improve the vanadium resistance of many zeolitic fluid cracking catalysts, it is especially useful with high activity catalysts such as those that, after steaming at 1450°F. for four hours in 100% steam, exhibit a microactivity in excess of about 2.5 as determined by ASTM D.3907-80 as described in the above-referenced U.S. patent application (hereinafter referred to as steam deactivated microactivity) when tested using the standard midcontinent gas oil feed specified in Example III.

As larger proportions of additives may be desirable with higher activity catalysts, the present invention is especially advantageous when the unblended zeolite containing microspheres used exhibit a steam deactivated microactivity in excess of about 6, particularly when the microspheres contain at least about 40%, preferably from about 50 to about 70%, by weight of Y-faujasite, in either the rare earth or ammonium ion exchanged forms, the volume of the pores in the 2 to 10 nm (hereinafter "micropore volume") range being less than about 0.20 cc/g preferably less than about 0.15 cc/g. Techniques for preparing such microspheres are set forth in the above-referenced U.S. Patent Application.

The clay based additive particles used in the present invention may be formed by impregnating microspheres of calcined kaolin clay, or mixtures of other clays in which at least a portion of the mixture is kaolin, with calcium oxide, a mixture of rare earth oxides, or their precursors. Typically, the calcined microspheres contain about 51% to 53% (wt.) $SiO_2$, 41 to 45% $Al_2O_3$, and from 0 to 1% $H_2O$, the balance being minor amounts of indigenous impurities, notably iron, titanium and alkaline earth metals. Generally, iron content (expressed as $Fe_2O_3$) is about ½% by weight and titanium content (expressed as $TiO_2$) is approximately 2%. The rare earth oxides, calcium oxide or precursors thereof may

be combined with the clay components before, during or after formation of the microspheres. If combined with the microspheres after formation thereof, the precursors may be added before or after calcining. Mixtures of rare earth oxides and calcium oxide or their precursors may be used to provide additives having desirable selectivity and immobilization properties.

The microspheres are preferably produced by spray drying an aqueous suspension of kaolin clay or mixtures of hydrous and pre-calcined clays. The term "kaolin clay" as used herein embraces clays, the predominating mineral constituent of which is kaolinite, halloysite, nacrite, dickite, anauxite and mixtures thereof. Preferably a fine particle size plastic hydrated clay, i.e., a clay containing a substantial amount of submicron size particles, is used in order to produce microspheres having adequate mechanical strength.

To facilitate spray drying, the powdered hydrated clay or hydrated-calcined clay mixture is preferably dispersed in water in the presence of a deflocculating agent exemplified by sodium silicate or a sodium condensed phosphate salt such as tetrasodium pyrophosphate. By employing a deflocculating agent, spray drying may be carried out at higher solids levels and harder products are usually obtained. When a deflocculating agent is employed, slurries of hydrous kaolin containing about 55 to 60% solids may be prepared. These high solids slurries are preferred to the 40 to 50% slurries not containing a deflocculating agent.

Several procedures can be followed in mixing the ingredients to form the slurry. One procedure, by way of example, is to dry blend the finely divided solids, add water and then incorporate the deflocculating agent. The components can be mechanically worked together or individually to produce slurries of desired viscosity characteristics.

Spray dryers with countercurrent, cocurrent or mixed countercurrent and cocurrent flow of slurry and hot air can be employed to produce the microspheres. The air may be heated electrically or by other convenient means, direct or indirect. Combustion gases obtained by burning hydrocarbon fuel in air can be used.

Using a cocurrent dryer, air inlet temperatures to $1200^{\circ}$ F. may be used when the clay feed is charged at a rate sufficient to produce an air outlet temperature within the range of $250^{\circ}$ F. to $600^{\circ}$ F. At these temperatures, free moisture is removed from the slurry without removing water of hydration (water of crystallization) from the raw clay ingredient. Dehydration of some or all of the raw clay during spray drying is contemplated. The spray dryer discharge may be fractionated to recover microspheres of desired particle size. Typically particles having a diameter in the range of 20 to 150 microns, preferably 20 to 70 microns, are recovered for calcination. Calcination may be conducted in the manufacturing operation or by adding the spray dried particles to the regenerator of a fluidized catalytic cracking unit.

While it is preferable in some cases to calcine the microspheres at temperatures in the range of about $1600^{\circ}$ F. to $2100^{\circ}$ F. in order to produce particles of maximum hardness, it is possible to dehydrate the microspheres by calcination at lower temperatures; for example, temperatures in the range of $1000^{\circ}$ F. to $1600^{\circ}$ F., thereby converting the hydrous clay fraction into the material known as "meta-kaolin." After calcination, the microspheres should be cooled and fractionated, if necessary, to recover the portion which is in desired size range.

Pore volume of the microspheres will vary slightly with the calcination temperature and duration of calcination and with the ratio of calcined to hydrous clay. Pore size distribution analysis of a representative sample obtained with a Digisorb 2500 analyzer

manufactured by the Micromertics Instrumentats, Corp. of Norcross, GA using nitrogen desorption indicates that most of the pores have diameters in the range of 15 to 60 nm.

The maximum surface area of the calcined microspheres should preferably be within from about 10 to about 20 $m^2/g$ as determined according to the well-known B.E.T. method using nitrogen absorption. It should be noted that the surface areas of commercial fluid zeolitic catalysts and common additives are considerably higher, generally exceeding values of 100 $m^2/g$ as measured by the B.E.T. method.

The particle size of these microspheres should be such that the microspheres will fluidize with the intended fluid cracking catalyst. To obtain optimal results, it is essential that the microspheres have at most minimal catalytic cracking activity; for this reason, the surface area of the clay based microspheres should be no more than 20 $m^2/g$ as higher surface areas lead to undesirably high levels of coking and light gas production.

After the microspheres of calcined kaolin have been formed, vanadium immobilizing agent may be applied by contacting the microspheres with an admixture of a volatile fluidic medium and a compound which yields the desired oxides when calcined For example, the mixed rare earth oxides may be deposited by impregnating the microspheres with an aqueous solution containing a sufficient amount of the mixed nitrates to result in the desired loading of rare earth oxides. Similarly, calcium may be applied as an aqueous solution of the acetate. Other suitable soluble compounds are well known in the art and include the hydrated rare earth halides and calcium nitrates, formates, thiosulfates, and the like. Calcium hydroxide may be applied as a suspension.

The most preferred of the water soluble rare earth compounds are the chlorides, while the most preferred water soluble calcium compounds are calcium chloride or nitrate. After impregnation, the particles are calcined at a temperature which is high enough to drive off the bulk of the solvent in which the immobilizing agent precursor is present. In many circumstances, it will be advantageous to calcine at a temperature which is high enough to convert the immobilizing agent precursor to the desired immobilizing agent although this may also be accomplished in use as the catalyst and additive particles pass through the regenerator on the first cycle. In this case, the counter ion may be chosen to avoid the generation of noxious fumes such as nitrogen oxides when the additive is calcined in use.

The optimum amount of immobilizing agent to be used will depend largely on: the amount of vanadium in the feedstock to be cracked; the resulting vanadium loading on the bulk equilibrium catalyst; the blend ratio between the zeolitic particles and the vanadium immobilization particles; the average age of the metals; the existent distribution of the vanadium; and the unit operating condition. Simplified guidelines can be specified, however, which recognize the desire to minimize chemical costs. If the additive to catalyst particle weight ratio is about 2:1, the level of rare earth oxide on the particles should generally be from about 2.5% REO to about 3.5% for applications involving vanadium levels of from 50 ppm to 2000 ppm on the equilibrium catalyst. For vanadium levels of about 3000 ppm to about 7000 ppm, the level of rare earth oxide on the particles should generally be optimally from about 5 to about 7% REO. For vanadium levels in excess of about 7000 ppm, the optimal quantity and loading of additive supplied should be sufficient to provide from about 2.5 to about 3.5 moles of mixed rare earth oxides for each mole of vanadium on

the equilibrium catalyst. Blending ratios and REO contents outside these ranges will also provide substantial benefits; the degree of benefits depending largely on the specific age of the metals and unit operating conditions such as the partial pressure of steam and air in the regenerator vessel and on the relative amounts of vanadium present in various oxidation states. In most applications involving residual oils or mixtures containing substantial amounts of residual oils, it will be desirable to use zeolite-containing particles to additive particles in weight ratios of from about 3:1 to about 1:3. With the high activity catalysts described above containing more than about 40% Y-faujasite/weight, it is preferred that the weight ratio of zeolite-containing particles to additive particles be no more than about 3:2. In more preferred applications with high zeolite catalysts, the weight ratio of zeolite containing particles to additive particles is less than 1:1. If the additive to zeolite containing catalyst particle weight ratio is about 2:1, the level of calcium oxide on the additive particles should generally be from about 0.5% to about 25% for applications involving vanadium levels of from 50 ppm to 2,000 ppm on the equilibrium catalyst. For vanadium levels of about 3,000 ppm to about 7,000 ppm, the level of calcium oxide on the additive particles should generally be optimally from about 0.5 to about 30%. Effective alumina based additive particles will usually contain from about 0.5 to about 40% CaO by weight, while the preferred additive particles will contain from about 5 to about 30% by weight. The most preferred alumina based additive particles will consist essentially of from about 10 to about 25% CaO, the balance being alumina. It is advantageous to introduce a large excess of calcium oxide into the reactor, usually in excess of 10, preferably in excess of 30, moles of calcium oxide per mole of vanadium.

or comparative results, to achieve good predictions of commercial performance, oxygen should be present during a hydrothermal deactivation step. It is believed that this effect occurs because vanadium in the plus five oxidation state is the mobile species while vanadium in lower oxidation states is less mobile or immobile so the presence of conditions favoring V(V) such as steaming in the presence of oxygen are desirable to better simulate typical FCC regenerators and provide for formation of the mobile species. Other variables such as the amount of coke on the catalyst affect the distribution of vanadium oxidation states and the exact quantity of vanadium which can migrate. Sulfur oxides also influence migration in some cases. Consequently, depending on the test conditions, varying degrees of the detrimental effects of vanadium are noted. A laboratory test that has been found to be particularly useful is described below. During testing of mixtures of zeolite-containing particles and additive particles, it has been found that more meaningful results are obtained when the vanadium-bearing compositions are separately impregnated upon unmixed zeolite containing particles and unmixed additive particles rather than on a preblended mixture. The separately impregnated particles are then dried in air at 600°F and calcined at 1100°F then blended. After calcining and blending, the vanadium impregnated catalytic composition is subjected to a hydrothermal deactivation step commonly referred to as steaming. The preferred vanadium bearing solutions are solutions of vanadium napthenates in organic solvents or mixtures of vanadium and nickel napthenates. Simultaneous impregnation upon a mixture of zeolite-containing particles and additive particles seems to provide significantly less meaningful results.

It has been found that the conventional steaming tests for stability can be made more meaningful for these

mixed compositions if from about 1 to about 20% of oxygen is included in the atmosphere during the steaming. Typically, preferred steaming conditions consist of a 4 hour treatment at a temperature between about 1300 and about 1500°F in the presence of 10% air and at least 20% steam. After steaming, well known microactivity tests can be used to determine activity and selectivity of the steamed catalysts in comparison to controls not containing vanadium. Alternatively, the blend components can be separated after steaming and separately analyzed for nickel and vanadium.

An alternative to the above test includes contacting the premixed blend in a fixed fluidized bed reactor with high metal content residual petroleum fractions under catalytic cracking conditions followed by cyclic cracking and regeneration to simulate metals deactivation. Samples can then be withdrawn and subjected to steaming conditions described above and evaluated for microactivity. Other variations are possible and are detailed in the examples.

PREPARATION IA

Microspheres of high zeolite catalyst were prepared as set forth in Example 1 of U.S. Patent Application, Serial No. 06/469,765 filed February 25, 1983, except that only a single rare earth exchange was carried out after the initial ammonium exchange.

PREPARATION IB

The preparation of Preparation IA was repeated, except that the microspheres were washed extensively with hot water after completion of the crystallization, thereby removing soluble silicates from the pores of the microspheres.

PREPARATION IC

The preparation of preparation IB was repeated, except that after separation of the crystallized microspheres from the mother liquor, the microspheres were washed, a rare earth exchange was carried out, the microspheres were dried then heat treated at about 1050°F in air for about 2 hours. The calcined microspheres were then subjected to an ammonium exchange step to reduce the sodium content to about 0.28% $Na_2O$ on a volatile free basis.

PREPARATION II

Additive microspheres having a silica content of about 52 wt%, an alumina content of about 43% and minor amounts of other impurities, notably water, iron, titanium and alkaline earth metals, were prepared by spray drying an aqueous suspension of kaolin clay then calcining the resultant microspheres as disclosed in U.S. Patents 3,647,718 and 4,263,128. Upon recovery, the microspheres had an average particle size of about 69 microns, and a BET surface area of about 8.5 $m^2/g$.

## PREPARATION III

A number of additive microspheres derived from clay or aluminas and containing vanadium immobilizing components were prepared. This example describes a typical procedure for preparation of additive microspheres containing a mixture of rare earths as the vanadium immobilizing component.

One hundred milliliters of lanthanum rich, mixed rare earth nitrate aqueous solution containing 25-27% mixed rare earth oxide equivalents was diluted by addition of 33 ml of deionized water. The diluted solution was used to impregnate 400g (as-is basis) of calcined clay microspheres made from kaolin clay alone as described above in Preparation II. After thorough blending, the sample was oven dried at about 200°F, heat treated at 600°F for 1 hour, and heat treated in a muffle furnace at 1100°F for 2 hours. Replicate analyses of the resulting microspheres indicated 0.045% $CeO_2$, 0.045% $Sm_2O_3$, 6.94% $La_2O_3$, 0.01% $Y_2O_3$, 2.28% $Nd_2O_3$, and 0.10% $Pr_6O_{11}$, totalling 9.41% mixed rare earth oxides (57 millimole/100g of additive microspheres (AM) plus vanadium immobilizing component).

Microspheres impregnated to different rare earth loadings were prepared by appropriate dilution of concentrated rare earth nitrate solution with pH adjustment to prevent rare earth precipitation while maintaining a constant ratio of total impregnation volume to microsphere weight. Alternative microspheres containing different clay ratios or aluminas may be used to prepare other additive microspheres containing vanadium immobilizing components.

PREPARATION IV

An aqueous solution containing 720g of $Ca(NO_3)_2 \cdot 4H_2O$ in 180 ml of deionized water was applied to 1000g of additive microspheres prepared as in Preparation II, resulting in a mixture of incipient wetness which was air dried overnight, then maintained at 600°F for one hour in air. After the microspheres were calcined at 1100°F for one hour, chemical analysis indicated a calcium oxide content of 10.34% on a volatile free basis.

PREPARATION V

This example illustrates a preparation of additive microspheres impregnated with a vanadium immobilizing agent. Calcined kaolin clay microspheres were prepared as described in Preparation II and used to prepare an additive microsphere bearing a vanadium immobilizing component consisting of $TiO_2$.

A three-necked, one liter round bottom flask was fitted with an overhead stirrer, pressure equalizing addition funnel, and a serum cap into which was inserted a syringe needle to release pressure buildup. Predried toluene (134 ml) was placed into the addition funnel and 500g (free-moisture free basis) of +325 mesh vacuum oven dried, calcined clay microspheres (AM) were placed into the flask. Nitrogen was used to displace air in the flask and to deaerate the toluene. Titanium tetrachloride (about 35 ml) was injected into the deaerated toluene to give a bright red solution. The liquid was slowly added to the solid with stirring. Approximately 40 ml of additional toluene were added to bring the solid to incipient wetness. The solid was transferred to a dry open beaker in the hood to evaporate toluene and hydrolyze the $TiCl_4$ in moist air. A small quantity of ethanol (about 5-10 ml) was added to help hydrolyze the $TiCl_4$, care being exercised not to add so much as to displace significant quantities of $TiCl_4$ from the pore structure. The sample was left open to the atmosphere overnight and subsequently calcined at 1100°F for 2 hours in air to produce an offwhite solid. Chemical analysis indicated about 4% $TiO_2$ (volatile free basis) in excess of titanium impurities indigenous to the clay microspheres.

PREPARATION VI

Zirconium oxide was impregnated on additive microspheres by dissolving 2.0g of zirconyl chloride ($ZrOCl_2 \cdot 4H_2O$) in 100 ml of cold deionized water. The solution was applied to 300 grams of microspheres which had been prepared in accordance with the procedure of Preparation II to yield a mixture at incipient wetness. After air drying, the impregnated microspheres were maintained at 600°F for an hour in air then calcined at 1100°F for an hour. Upon recovery, the microspheres were found to be impregnated with about 0.30 wt% Zr.

PREPARATION VII

$AM + CeO_2$

Additive microspheres were impregnated with ceria in a manner analogous to that of Preparation III, except that cerium nitrate solution of appropriate concentration was substituted for the mixed rare earth nitrates solution. Upon recovery, the additive microspheres were found to bear approximately 6 wt% of cerium oxide.

PREPARATION VIII

Additive microspheres were impregnated with $P_4O_{10}$ by contacting the microspheres with phosphoric acid to incipient wetness, then drying in air followed by calcining at about 1100°F. This procedure was repeated several times so that upon recovery, the microspheres prepared were found to bear about 6.5 wt % of $P_4O_{10}$.

PREPARATION IX

$AM + La_2O_3$

Additive microspheres were impregnated with lanthana in a manner analogous to that of Preparation III, except that lanthanum nitrate solution of an appropriate concentration was substituted for the mixed rare earth nitrates solution.

PREPARATION X

This preparation illustrates the preparation of additive microspheres containing magnesium oxide as the vanadium immobilizing component by an alternate deposition method using a fluid bed coater.

A nearly saturated solution of magnesium acetate (aqueous) was prepared by dissolution of about 651g of $Mg(C_2H_3O_2)_2 \cdot 4H_2O$ per liter of deionized water. Calcined clay microspheres (1 kilogram) were placed into the fluidization chamber of an Aeromatic AG laboratory-scale fluid bed coater, model number STREA 1, and fluidized with a hot air stream at 90°C to 100°C. The aqueous solution was intermittently introduced as a fine spray mist at about 20 ml/minute with drying between liquid addition. Ten cycles of liquid addition and air drying were performed using 125 to 170 ml of liquid during each addition. After the dried powder was withdrawn, it was calcined in a packed bed at 600°F for one hour and at 1100°F for 2 hours. Chemical analysis of the product indicated 11.0% MgO on a volatile-free basis.

PREPARATION XI

REO on $Al_2O_3$

Mixed rare earth oxides were deposited on particles of alumina having a particle size of from 45 microns to about 63 microns and a BET surface area of about 89 $m^2/g$ by a procedure analogous to that of Preparation III. Upon recovery, the particles were found to bear 80 millimoles of mixed rare earth oxides per 100 g of alumina plus rare earth oxide.

PREPARATION XII

Mg on $Al_2O_3$

Particles of the alumina having the properties described in Preparation XI were impregnated with magnesium oxide in a manner analogous to that of Preparation X. Upon recovery, the alumina particles were found to bear approximately 0.5% magnesia by weight.

PREPARATION XIII

Microspheres of alumina silica permeated with calcium oxide were prepared by mixing 0.64 kg of ground limestone (average particle size 4.2 microns) having an approximate composition of 54.7% CaO, 0.6% MgO, 0.4% $SiO_2$, 0.2% $Al_2O_3$, and 0.1% $Fe_2O_3$ and a loss on ignition of 43.1% with 2.36 kg kaolin clay to form an aqueous suspension with 60% solids using tetrasodium phosphate as a dispersant in the amount of 10 pounds per ton of solids, using procedures described in U.S. Patents 3,647,718 and 4,263,128. The slurry was then spray dried with an inlet temperature of 130°C and an outlet temperature of 340°C. The resulting microspheres were then calcined in a muffle furnace at about 996°C for 1 hour to yield microspheres having an average particle size of about 64 microns and the following composition on a volatile free basis: CaO, 15.6%; $Al_2O_3$, 38.2%; $SiO_2$, 43.6%; $Na_2O$, 0.78%; $Fe_2O_3$, 0.45% and $TiO_2$, 1.3%. These microspheres could be used as additives to both the high activity commercial catalyst and the high zeolite catalyst to provide effective vanadium immobilization with advantageously low coke and hydrogen make.

Example I

Example I demonstrates the concentration of vanadium onto zeolitic microspheres when such microspheres are used as blend components with calcined clay microspheres in the absence of a vanadium immobilization component and the blend is used to treat metals-containing feedstocks and in particular illustrates that if the zeolite containing microspheres of Preparation I are diluted with microspheres of calcined kaolin of Preparation II, the undesirable effects of vanadium on the catalyst are magnified as the vanadium preferentially migrates from the additive microspheres to the zeolite containing particles.

One to one (by weight) blends of fractionated high activity commercial catalyst (HACC) microspheres such as ULTRASIV $^{R}$ 260 sold by Engelhard Corporation or of high zeolite experimental catalyst (HZC) prepared as described in Preparation I and of fractionated calcined kaolin clay additive microspheres (AM) were composited. After blending, these metals were applied during repeated cycles in a fixed fluidized bed cracking/ regeneration reactor using either a midcontinent gasoil which had been enriched with nickel and vanadium naphthenates or a 20% high metals Mayan resid/80% midcontinent gasoil blend.

The samples were withdrawn after a regeneration cycle to burn off carbonaceous deposits and a small portion of each sample fractionated and analyzed for nickel and vanadium. Alternatively, samples were prepared by impregnation of the blended composites with vanadium and nickel naphthenates in cyclohexane followed by drying, calcination, and analysis. The portion of each sample remaining after analysis was then steam treated for 4 hours at 1400°F using 100% steam in a fluidized bed reactor. After fractionation, nickel and vanadium analyses were conducted to determine the metals distribution between blend components of different

particle sizes. The metals distribution results before and after steam treatment are shown in Table I. These show a considerable migration of vanadium species from additive to the zeolitic particles. These data also demonstrate that the initial vanadium distributions produced by simultaneous impregnation techniques wherein the metal is applied directly to the blend are not equivalent to those achieved by cracking of metal contaminated feedstocks.

TABLE I
METAL RATIOS FOR EXAMPLE I
BEFORE AND AFTER STEAMING[1] WITHOUT OXYGEN INCLUSION

| 1:1 (wt:wt) Composites of | Metals Application Technique | Metals Weight Ratio on Zeolitic To Non-Zeolitic Fractions | | | |
|---|---|---|---|---|---|
| | | Ni Prior to Steaming | V Prior to Steaming | Ni After Steaming | V After Steaming |
| +200 mesh HACC / -200 mesh AM | Cracking of metal naphthenates (9 cycles) contaminated feedstock | 1.0 | 1.5 | 1.0 | 4.2 |
| -200 mesh HACC / +200 mesh AM | " " " | 1.4 | 2.1 | 1.6 | 3.0 |
| -200 mesh HZCA / +200 mesh AM | " " " | 1.1 | 1.3 | 1.1 | 3.5 |
| +200 mesh HACC / -200 mesh AM | Impregnated as metal naph-thenates | 3.4 | 3.2 | 2.4 | 7.4 |
| -200 mesh HACC / +200 mesh AM | " " " | 2.1 | 2.6 | 2.2 | 5.4 |
| -200 mesh HZCA / +200 mesh AM | cracked on from 20% Mayan resid (40 cycles) | 0.7 | 1.6 | 0.7 | 3.1 |
| -200 mesh HZCA / +200 mesh contam. AM | Applied in fix fluidized bed using 20% Mayan resid with AM component only, prior to blending | - | - | - | 1.4 |

1 1400°F/4 hours/100% steam in a fixed fluidized bed reactor

Example II

This example demonstrates the influence of steaming environment on vanadium migration. Blends were prepared using one part by weight of (clean) 200-325 mesh high zeolite experimental catalyst (HZC) and one part by weight of 100-170 mesh calcined kaolin clay microspheres (AM) which had been impregnated with vanadium naphthenate and calcined separately, prior to blending. Metals contaminated microspheres were prepared bearing two different loadings of vanadium. The "Low Loading" microspheres bore 4280 ppm by weight of vanadium while the "High Loading" microspheres bore 8450 ppm vanadium by weight. The blend was split into eight portions and each portion steam treated in a different environment. After steaming, each blend was screened to separate component fractions and each component analyzed for vanadium. Results appear in Table II.

These results indicate that, in the presence of air or $SO_2$, vanadium tends to preferentially migrate to zeolite containing particles; whereas the tendency of vanadium to migrate to zeolite containing particles seems to be reduced if those particles are precoked.

TABLE II

VANADIUM DISTRIBUTIONS AFTER STEAMING FOR EXAMPLE II

| | Distribution (V on HZC/V on AM) after Steaming | |
|---|---|---|
| | Low Loading (4280 ppm V) | High Loading (8450 ppm V) |
| 1450°F/4 hour | | |
| Steaming Atmosphere | | |
| 100% Steam | 0.8 | 0.5 |
| 99% Steam +1% Air | 3.7 | - |
| 90% Steam +10% Air | 3.8 | 2.8 |
| 99.9% Steam +0.1%$SO_2$ | 1.7 | - |
| 99% Steam + 1% $SO_2$ | 2.4 | 3.3 |
| 89.9% Steam +10% Air+0.1% $SO_2$ | 2.8 | - |
| 89% Steam +10% Air + 1% $SO_2$ | 2.4 | 3.0 |
| Precoking to 3%C followed by 100% Steam followed by dry calcination | 0.3 | - |

Example III

Blends containing zeolitic cracking catalyst and additives prepared by the procedures of the foregoing preparations were screened for selectivity and activity characteristics in laboratory microactivity tests in the presence of metals. Each of the cracking catalyst component and the vanadium immobilizing additive component were separately fractionated and impregnated with mixtures of vanadium and nickel naphthenates in cyclohexane to incipient wetness to equivalent metals loading. After drying and heat treatment in a muffle furnace at 600°F for one hour, followed by heat treatment at 1100°F for two hours, the contaminated additive was blended with the appropriate quantity of contaminated zeolitic catalyst. The blend ratio was chosen to approximate the activity of a reference high activity commercial catalyst (HACC). A high zeolite experimental catalyst prepared as in Preparation IA, IB or IC (HZCA, HZCB, HZCC respectively) was used as the zeolitic blending component. Various additives were used, including additive microspheres (AM) not containing the immobilizing component. The blended mixtures of high zeolite experimental catalyst and additive microspheres plus vanadium immobilizing component (VIC) were placed in a cyclic fixed fluidized bed catalytic cracking reactor operated at 950°F during the 75 second cracking portion of the cycle with the catalyst to oil weight ratio being 5.0, followed by a temperature of up to about 1350°F for the 26 minutes of the regeneration portion of the cycle. Each blend was cycled ten times between cracking and regeneration, using a high sulfur residuum oil/gas oil blend containing about 3% sulfur, having a Conradson Carbon Content of about 6.95% and an API gravity of about 24. The regenerated blended samples were then withdrawn and subjected to steaming in a fixed fluidized bed reactor at 1450°F for four hours with a flowing gas consisting of 10 vol. %

air, 0.1 vol. % $SO_2$, and 89.9 vol. % steam. Following this treatment, portions of the samples were tested in standard microactivity (MAT) tests established in our laboratory (modification of ASTM procedure as set forth in the above incorporated U.S. Patent Application 06/469,765) operated at catalyst/oil weight ratios of 5 and a weight hourly space velocity of 15 $hr^{-1}$ using a midcontinent gasoil feedstock (having the properties set forth in Table III) to determine relative activities and selectivities. In runs using blends of high zeolite experimental catalyst of one particle size distribution and additive microspheres plus vanadium immobilizing components having a different particle size distribution, an additional portion of each sample withdrawn from the fixed fluidized bed unit was fractionated by screening to separate the high zeolite experimental catalyst (HZC) component from the additive microspheres (AM) plus vanadium immobilizing (VIC) component. These fractions were then each analyzed for nickel and vanadium content. The resulting activity, selectivity, and vanadium migration data are reported in Table IV, and the correlation between vanadium migration and catalyst blend activity is shown in Figure I.

The results indicate improved activity maintenance for samples containing additive microspheres plus vanadium immobilizing component above the minimum levels and further indicate correspondingly reduced vanadium migration compared to controls. Runs 4 and 5 show that the effective loading of MgO on additive microspheres under these conditions exceeds 170 millimoles MgO per 100g of additive microspheres plus vanadium immobilizing component. Runs 6 through 10 show the dependence of performance on REO loading.

TABLE III

ANALYSIS OF MIDCONTINENT GAS OIL FEEDSTOCK

| | | |
|---|---|---|
| API Gravity (@ 60°F) | | 28.0 |
| Ramsbottom Carbon (wt%) | | 0.26 |
| Simulated Distillation | | |
| | IBP | 415°F |
| | 10% | 550°F |
| | 20% | 609°F |
| | 30% | 659°F |
| | 40% | 707°F |
| | 50% | 756°F |
| | 60% | 807°F |
| | 70% | 864°F |
| | 80% | 932°F |
| | 90% | 1030°F |
| | 92% | 1066°F |
| Total Sulfur (wt%) | 0.59 | |
| Fe | 1 ppm | |
| Cu | 3 ppm | |
| Ni | 1 ppm | |
| V | 1 ppm | |
| Total Nitrogen | 903 ppm | |
| Basic Nitrogen | 139 ppm | |
| Pour Point | 90°F | |
| Bromine No. | 22 | |

34

TABLE IV

SUMMARY OF ACTIVITY/SELECTIVITY DATA
FOR VANADIUM IMMOBILIZATION ADDITIVES USING MAT SCREENING

| Run | Composition [a] | % Zeolitic micro-spheres in blend | ppm on Composite V | ppm on Composite Ni | AM Mesh/ HZC Mesh | % [b,d] | Avg Norm Conv (f) | Coke Factor | $H_2$ Make (f) |
|---|---|---|---|---|---|---|---|---|---|
| 1 | HACC | 100 | 4045 | 2400 | Full | | 58.5 | 1.73 | 0.74 |
| 2 | HZCA/AM | 33 | 4326 | 2645 | 100/170 200/325 | 83% (56.5) [d] | 19.2 | 1.11 | 0.32 |
| 3 | HZCA/AM [e] | 33 | 4182 | 1859 | 100/170 200/325 | | 39.8 (e) | 0.96 | 0.33 |
| 4 | HZCA/AM+170MgO | 33 | 4325 | 2399 | 100/170 200/325 | 24% (14) [d] | 25.9 | 1.03 | 0.32 |
| 5 | HZCA/AM+251MgO | 33 | 3920 | 2612 | 100/170 200/325 | -8% [c] (-5.7) [d] | 61.2 | 1.09 | 0.42 |
| 6 | HZCA/AM+86REO | 33 | 3917 | 2320 | 100/170 200/325 | | 63.3 | 1.22 | 0.38 |
| 7 | HZCA/AM+78REO | 33 | 4399 | 2356 | 100/170 200/325 | | 55.0 | 0.98 | 0.39 |
| 8 | HZCA/AM+64REO | 33 | 4326 | 2310 | 100/170 200/325 | -4% (-3) [d] | 64.0 | 1.10 | 0.38 |
| 9 | HZCA/AM+35REO | 33 | 4456 | 2521 | 100/170 200/325 | -7% (-4.8) [d] | 67.4 | 1.12 | 0.45 |
| 10 | HZCA/AM+11REO | 33 | 4279 | 2866 | 100/170 200/325 | 0% (O) [d] | 53.4 | 1.36 | 0.42 |

a. Units of VIC refer to millimoles per 100g of AM plus VIC
b. % of V originally on AM which migrates to HZC component
c. Poor mass balance associated with this particular entry
d. % of total V originally present which migrates to HZC shown in parentheses
e. This run yielded a somewhat different conversion from that obtained in run 2, but both resulted in generally very low conversions, precision below about 40% conversion is considerably lower than precision obtained with higher conversion.
f. Wt. % of feed

Example IV

Additives prepared by the procedures of the foregoing preparations were further tested in the presence of metals as blends with zeolitic cracking catalysts to more completely characterize their activity and selectivity characteristics. Each of the cracking catalyst component and the additive component were separately impregnated with mixtures of vanadium and nickel naphthenates in cyclohexane to incipient wetness to roughly equivalent metals loading. After drying and heat treatment in a muffle furnace at 600°F for one hour followed by heat treatment at 1100°F for two hours, the contaminated additive was blended with the appropriate quantity of contaminated zeolitic catalyst. Either a high activity commercial catalyst or a high zeolite experimental catalyst was used as the blending agent. The blended mixtures of catalyst and additive were then treated in a fixed fluidized bed at 1450°F with a flowing gas mixture consisting of 10 vol. % air plus 90 vol. % steam for four hours. After replicate steamings, each sample was tested in replicate microactivity cracking tests referred to in Example III. The test is a standard laboratory procedure which was run at catalyst/ oil weight ratio of 5 and weight hourly space velocity of 15 $hr^{-1}$ using a mid-continent gasoil feedstock. Weight percent conversion, relative selectivity factors, and hydrogen make expressed as weight % of feed were reported. Control runs were generated from uncontaminated blends containing the prescribed additive and from metals contaminated blends prepared with the additive microspheres not containing the immobilizing component. Results of these tests are shown in Table V. The data indicate a clear improvement in conversion and, in some cases, in the selectivity factors for blends with the immobilizing additive relative to blends without the immobilizing component added to the additive. The selectivity factors indicated are the ratios of the weight % yields obtained with the indicated catalyst to the weight % yields obtained with uncontaminated HFZ-20 $^R$ catalyst at the same conversion.

TABLE V (FOR EXAMPLE IV)
SUMMARY OF ACTIVITY/SELECTIVITY DATA[d,e] FOR V IMMOBILIZATION ADDITIVES

| Composition[a,b,c] | Nominal ppm on Composite V | Nominal ppm on Composite Ni | Avg Norm Conv | Average Values: Gasoline Factor | Coke Factor | $H_2$ Make | $C_4^=$ Factor | LCO Factor | Bottoms Factor | $IC_4/C_4^=$ Factor |
|---|---|---|---|---|---|---|---|---|---|---|
| 100% HACC | 4670 | 2615 | 61.7 | 0.98 | 1.70 | 0.74 | 0.79 | 1.01 | 0.99 | 1.05 |
| 100% HACC | 2130 | 987 | 72.4 | 1.02 | 1.32 | 0.46 | 0.82 | 0.99 | 1.03 | 1.09 |
| 100% HACC | 0 | 0 | 79.6 | 1.04 | 0.94 | 0.06 | 0.91 | 0.94 | 1.16 | 1.14 |
| 50% HACC,50% AM | 5000 | 2500 | 37.8 | - | 1.8 | 0.63 | - | - | - | - |
| 50% HACC,50% AM +28 mmole REO/100g | 5000 | 2500 | 50.8 | - | 1.5 | 0.55 | - | - | - | - |
| 33% HZCA, 67% AM | 4600 | 2600 | 40.7 | 1.05 | 1.29 | 0.45 | 0.68 | 0.90 | 1.08 | 2.50 |
| 33% HZCA, 67% AM | 0 | 0 | 75.2 | 1.04 | 0.90 | 0.04 | 0.91 | 0.94 | 1.14 | 1.50 |
| 38% HZCA, 67% AM | 5000 | 2500 | 40.5 | - | 0.86 | - | - | - | - | - |
| 50% HZCA, 50% AM | 0 | 0 | 80.7 | 1.04 | 0.95 | 0.02 | 0.89 | 0.96 | 1.12 | 1.33 |
| 50% HZCA, 50% AM | 4600 | 2600 | 44.7 | 1.04 | 1.30 | 0.48 | 0.72 | 0.90 | 1.10 | 2.22 |
| 33% HZCA, 67% AM +28 mmole REO/100g | 4522 | 2856 | 61.8 | 1.01 | 1.34 | 0.45 | 0.81 | 0.92 | 1.12 | 1.60 |
| 33% HZCA, 67% AM +28 mmole REO/100g | 1847 | 1205 | 69.4 | 1.02 | 1.23 | 0.32 | 0.86 | 0.93 | 1.13 | 1.50 |
| 33% HZCA, 67% AM +28 mmole REO/100g | 0 | 0 | 75.8 | 1.09 | 0.80 | 0.02 | 0.80 | 0.93 | 1.15 | 1.36 |
| 33% HZCA, 67% AM +15mmole REO/100g | 4593 | 1812 | 59.3 | 1.00 | 1.53 | 0.49 | 0.82 | .90 | 1.13 | 1.68 |

Refer to next page for explanation of codes a, b, c, d, and e

TABLE V (Continued)

| Composition[a,b,c] | Nominal ppm on Composite V | Nominal ppm on Composite Ni | Avg Norm Conv | Average Values Gasoline Factor | Coke Factor | $H_2$ Make | $C_4$ Factor | LCO Factor | Bottoms Factor | $iC_4/C_4{=}$ Factor |
|---|---|---|---|---|---|---|---|---|---|---|
| 33% HZCA, 67% AM +15mmole/100g REO | 1941 | 1420 | 66.9 | 1.03 | 1.14 | 0.30 | 0.83 | .94 | 1.10 | 1.49 |
| 33% HZCA, 67% AM +15mmole/100g REO | 0 | 0 | 76.0 | 1.07 | 0.87 | 0.02 | 0.83 | .93 | 1.16 | 1.33 |
| 33% HZCA, 67% AM +256 mmole/100gMgO | 4084 | 2548 | 62.3 | 1.01 | 1.26 | 0.47 | 0.89 | 0.93 | 1.10 | 1.49 |
| 33% HZCA, 67% AM +273 mmole/100gMgO | 4700 | 3000 | 62.9 | - | 1.32 | 0.51 | - | - | - | - |
| 33% HZCA, 67% 90 $M^2g^{-1}$ $Al_2O_3$ | 4492 | 2484 | 62.7 | 0.97 | 1.75 | 0.69 | 0.87 | 0.94 | 1.09 | 1.35 |
| 33% HZCA, 67% 120 $M^2g^{-1}$ $Al_2O_3$ | 4653 | 2575 | 64.7 | 0.96 | 1.74 | 0.69 | 0.87 | 0.97 | 1.05 | 1.23 |
| 38% 325/200 Mesh HZCA, 62% 62$m^2g^{-1}$ $Al_2O_3$ (170/100 mesh) | 5000 | 2500 | 52.9 | - | 1.7 | 0.62 | - | - | - | - |
| 38% 325/200 Mesh HZCA, 62% 62$m^2g^{-1}$ $Al_2O_3$+136% CaO (170/100 mesh) | 5000 | 2500 | 64.0 | - | 1.1 | 0.25 | - | - | - | - |

a additive loading levels expressed as millimoles per 100g.
b HACC is high activity commercial cracking catalysts; HZCA , HZCB and HZCC are high zeolite experimental catalysts prepared as set forth in Preparations IA, IB, or IC respectively. AM is additive microsphere.
c All compositions were prepared from the full range of mesh sizes of each component unless otherwise specified.
d Each component impregnated separately prior to blending
e Triplicate MATS c/o-5 WHSV = 15 $h^{-1}$, midcontinent gasoil described in Table III.

Example V

This example illustrates the improvement in vanadium tolerance imparted by the use of the REO-containing additive microspheres in place of the additive microspheres alone for 1:1 blends with high activity commercial catalyst.

The procedure of Example IV was carried out using high activity commercial catalyst in place of high zeolite experimental catalyst and blending with additive microspheres plus REO or additive microspheres alone. Results are shown in Table VI and illustrate the benefit of additive microspheres plus REO over additive microspheres alone as a blending agent.

TABLE VI (FOR EXAMPLE V)

VANADIUM IMMOBILIZATION ADDITIVE FOR HACC

(1450°F/4 HR/10% AIR PLUS 90% STEAM)

| Composition | 1:1 HACC/AM + REO | | |
|---|---|---|---|
| V/Ni (Nominal ppm)[a] | 5000/2500 | | |
| | REO Loading (millimoles/100g) | | |
| | 0 | 17 | 28 |
| Conversion (wt.%) | 37.8 | 50.5 | 50.5 |
| Gasoline (wt.%) | 27.5 | 38.5 | 38.7 |
| LCO (wt.%) | 27.2 | 25.6 | 25.3 |
| Bottoms (wt.%) | 34.7 | 23.6 | 23.9 |
| Coke Factor | 1.8 | 1.5 | 1.5 |
| $H_2$ (wt.%) | 0.63 | 0.59 | 0.55 |

[a] Particles contaminated separately with metals prior to blending.

Example VI

This example shows the beneficial use of a vanadium immobilizing component on alumina. A 325 mesh to 200 mesh cut of HZC (of Preparation IA) was impregnated using the metal naphthenate technique to 5000 ppm (nom.) and 2500 ppm (nom.) nickel and calcined. A 170 mesh to 100 mesh fraction of pre-steamed Gibbsite trihydrate alumina (C-30 type sold by Aluminum Corporation of America, Pittsburgh, PA) which had been treated with 100% flowing steam at 1500°F for four hours in a fixed fluidized bed reactor to give a product with a B.E.T. surface area of $62m^2/g$ impregnated to various calcium loadings and similarly impregnated with metals. Blends containing 38% by weight of the metal contaminated high zeolite experimental catalyst (HZC) component and 62% of metal contaminated alumina plus calcium component were prepared and steam treated at 1450°F/4 hours/90% steam plus 10% air conditions followed by replicate MAT analysis using a standard midcontinent gasoil. Results appear in Table VII.

The results of Table VII show the improvement in conversion and in selectivity observed by use of the vanadium immobilizing component on alumina. To illustrate the detrimental effects of using higher surface area aluminas, the results from one evaluation of an additive based on such an alumina is also included. This sample was prepared as above, except that the steaming temperature was 1200°F, and the final B.E.T. surface area was 121 $m^2/g$.

TABLE VII
RESULTS OF TESTING ON CALCIUM ON ALUMINA
VANADIUM IMMOBILIZING ADDITIVE FOR EXAMPLE VI[a]

| % CaO on Alumina | Metals (5000ppmV 2500ppmNi) | Wt.% Conversion | Coke Factor | Hydrogen Make (Wt. % of Feed) |
|---|---|---|---|---|
| 0 | No | 72.8 | 0.82 | 0.03 |
| 0 | Yes | 52.9 | 1.7 | 0.62 |
| 7.4 | Yes | 60.3 | 0.98 | 0.21 |
| 10.0 | Yes | 56.3 | 0.95 | 0.19 |
| 11.5 | Yes | 61.7 | 1.1 | 0.23 |
| 13.6 | No | 70.0 | 0.79 | 0.02 |
| 13.6 | Yes | 64.0 | 1.1 | 0.25 |
| 20.0 [b] | Yes | 23.1 | 1.4 | 0.31 |

a. Separate particle impregnation of each component with metals followed by blending using 38% of HZC component. Steaming was conducted at 1450°F/4 hours/90% steam + 10% air MAT conditions were cat/oil=5, WHSV=15hr$^{-1}$, midcontinent gasoil feed.

b. High surface area alumina, surface area = 121 $m^2/g$.

Example VII

High zeolite catalyst prepared as described in Preparation I B were blended with additive microspheres prepared as described in Preparation II. Rare earth oxides were impregnated onto the additive microspheres in the amount of 28 millimoles of rare earth per gram of additive. Metals in the amounts indicated in Table VII were impregnated onto the separate components and additionally onto a sample of commercially available high activity catalyst. After drying, calcining and analysis as described above, the blends of high zeolite catalyst and additive were each subjected to 10 cracking and regeneration cycles in a fixed fluidized bed with a high sulfur residual feed. For comparative purposes, the high activity commercial catalyst was subjected to the same aging procedure. Thereafter, each catalyst was steamed in 10% air plus 90% steam at 1450°F for four hours, then activity and selectivity were measured by the microactivity test set forth above. The results which are presented in Table VIII illustrate that the blend of high zeolite catalyst and rare earth impregnated microspheres exhibit higher conversion, lower coking and lower hydrogen production than the high activity commercial catalyst which had been subjected to equivalent aging.

TABLE VIII

SUMMARY OF ACTIVITY/SELECTIVITY DATA FOR V IMMOBILIZATION ADDITIVES

| Composition | ppm on Composition V | Ni | Mesh | Avg. Norm. Conv. | Coke Factor | $H_2$ Make |
|---|---|---|---|---|---|---|
| 33% HZC/AM+28[b] REO | 4522 | 2856 | Full[a] | 60.9 | 1.2 | 0.45 |
| HACC | 4670 | 2675 | Full | 52.6 | 1.9 | 0.73 |

a Full mesh indicates 100/325 or particle sizes ranging from 44 microns to 149 microns.

b Vanadium immobilization component concentrations are expressed in millimoles of vanadium immobilization component per 100g of additive.

Example VIII

The procedure of Example VII was repeated with the catalyst compositions indicated in Table IX, except that the aging cycles in the fixed fluidized bed were omitted. The MAT results are set forth in Table IX illustrating that even though completely equivalent conversions were not obtained, in those cases where the additive microspheres bore a vanadium immobilizing component, the results obtained were, in many cases, roughly equivalent to those obtained with high activity commercial catalyst, especially the rare earth oxide containing catalyst which exhibited high conversion, increased gasoline factor along with decreased hydrogen and coke production.

TABLE IX
SUMMARY OF ACTIVITY/SELECTIVITY DATA
FOR V IMMOBILIZATION ADDITIVES

| Avg. Composition[a] | Norm[c] Conv. | Gasoline Factor | Coke Factor | $H_2$[c] Make |
|---|---|---|---|---|
| | -------Average Values------- | | | |
| HACC | 63.7 | 0.98 | 1.59 | 0.68 |
| 33%HZC/AM | 37.4 | 1.05 | 1.15 | 0.35 |
| 33%HZC/AM+80REO[b] | 56.9 | 1.02 | 1.10 | 0.39 |
| 33%HZC/AM+205MgO[b] | 50.7 | 1.02 | 1.16 | 0.42 |
| 33%HZC/121$m^2$/g $Al_2O_3$ | 61.3 | 1.00 | 1.64 | 0.71 |
| 33%HZC/42$m^2$g $Al_2O_3$ | 58.1 | 0.96 | 1.80 | 0.72 |

a Full mesh range of each component was used. Each component was separately impregnated with nominally 5000 ppm V+2500 ppm Ni and calcined followed by blending.

b Vanadium immobilization component concentration are expressed in millimoles of vanadium immobilization component per 100 g. of blending agent.

c Weight per cent of feed.

Example IX

To illustrate the relative performance of the catalysts of the present invention in those cases where the metals level is not significant, as compared to high zeolite content catalysts blended with additive microspheres not containing a vanadium immobilizing component, the catalyst compositions set forth in Table X were subjected to steaming in 90% steam with 10% air at 1450°F for four hours and then subjected to microactivity tests. The results as set forth in Table X demonstrate that satisfactory performances are obtained with all three catalysts. These results in the absence of metals should be compared to those in Example VIII (Table IX) wherein it can be appreciated that high metals significantly degrade the performance of the catalyst not containing a vanadium immobilizing component.

TABLE X

COMPARISON OF REO/AM and MgO/AM ADDITIVES
AS 33% HZC/67% ADDITIVE BLENDS IN
1450°F/90% $H_2O$ + 10% AIR/4Hr. STEAMING
IN THE ABSENCE OF CONTAMINANT METALS

| Composition | 33%HZC/ AM | 33%HZC/256 MgO on AM | 33%HZC/35REO on AM |
|---|---|---|---|
| Avg. Conversion | 75.2 | 70.2 | 76.2 |
| Avg. $C_4$- Factor | 0.91 | 0.74 | 0.97 |
| Avg. Gasoline Factor | 1.04 | 1.10 | 1.02 |
| Avg. LCO Factor | 0.94 | 0.95 | 0.94 |
| Avg. Bottoms Factor | 1.14 | 1.10 | 1.15 |
| Avg. Coke Factor | 0.90 | 0.75 | 0.90 |
| Avg. $IC_4/C_4$= Factor | 1.50 | 1.52 | 1.55 |
| $H_2$ Make (% of Feed) | 0.04 | 0.02% | 0.04% |

Example X

Catalytic compositions as set forth in Table XI were subjected to the preferred metals impregnation procedure set forth above then steamed in 90% steam plus 10% air at 1450°F for four hours, then analyzed for metals and subjected to microactivity tests. The results set forth in Table XI demonstrate that tin and bismuth are considerably less effective than the rare earths and calcium in retarding vanadium migration.

TABLE XI
MIGRATION AND MAT DATA

| Catalyst | Metal Migration to HZC Component, % V | Ni | Conversion[d] | Coke Factor | $H_2$ Make[d] |
|---|---|---|---|---|---|
| HZC/AM+28mmREO (4.7%) | (-6 | 5)[c] | 61.8 | 1.30 | .45 |
| HZC/AM+14%CaO | -11 | 21 | 55.5 | 0.95 | .40 |
| HZC/AM+5.6%Sn | 47 | 6 | 44.2 | 0.95 | .38 |
| HZC/AM+12%Bi | 18 | 2 | 10.3 | 1.65 | .16 |
| HACC | | | 61.7 | 1.7 | .74 |

a) 33% 200/325 HZC;67% 170/100 Additive
Metals loading separately impregnated on both components
4000 - 5000 ppm V
2000 - 2500 ppm Ni
Steaming condition: 1450°F in 4 Hr./90% Steam and 10% Air

b) ISA = initial surface area at time of impregnation.

c) % Migration data measured under different experimental conditions: 1450°F/4 Hr./89% Steam/10% Air/1% $SO_2$.

d) weight % of feed

Example XI

This example illustrates the beneficial improvement in attrition properties made by addition of a variety of vanadium immobilization compounds to additive microspheres or alumina particles relative to calcined kaolin microspheres alone or aluminas alone, respectively. Samples were prepared according to the procedures of the foregoing procedure and tested using the Engelhard Attrition Index test.

Results are shown in Table XII demonstrating that the addition of various vanadium immobilization species improves the attrition resistance properties after calcination since the rate of loss is markedly decreased.

TABLE XII (For Example XI)
ENGELHARD ATTRITION INDEX OF VANADIUM IMMOBILIZATION ADDITIVES PREPARED BY IMPREGNATION/CALCINATION

| Composition of Additive | EAI[a] % Loss Per Second |
|---|---|
| AM | 0.96 |
| AM + 256 MgO | 0.54 |
| AM + 257 MgO | 0.33 |
| AM + 11 REO | 0.68 |
| AM + 35 REO | 0.49 |
| AM + 64 REO | 0.42 |
| AM + 86 REO | 0.54 |
| 120 $m^2/g$ $Al_2O_3$ | 0.77 |
| 80 $m^2/g$ $Al_2O_3$ | 0.64 |
| AM + 2479 CaO | 0.20 |

[a] Engelhard Attrition Index

AM = 100% calcined kaolin additive microspheres

AM + x Y = calcined kaolin microspheres + x millimoles of Y per 100g of impregnated additive microspheres

C L A I M S :

1. A fluidizable catalyst composition for fluid catalytic cracking of hydrocarbon fractions, the composition comprising [a] zeolitic particles of relatively high catalytic activity and comprising Y-faujasite in a matrix containing at least a portion of silica-alumina and [b] alumina-based additive particles which are relatively inert towards catalytic cracking and comprise calcium oxide/alumina particles to act as a vanadium immobilization agent, the zeolitic particles after steam treatment in a fluidized bed reactor at 1450°F for four hours using 90 volume % flowing steam plus 10% air atmosphere displaying a weight percent conversion of at least 70% when tested using the feedstock of Table III in the microactivity test of ASTM D.3907-80, the reactor being operated at 910°F, the catalyst to oil weight ratio being 5, and the weight hourly space velocity being $15h^{-1}$.

2. A composition according to claim 1 wherein the zeolitic particles include at least 20%, preferably at least 40%, by weight Y-faujasite and have a microporosity of no more than 0.2 cc/g.

3. A composition according to claim 1 or 2 containing from 20 to 90 wt.% of the additive particles and from 10 to 80 wt.% of the zeolitic particles.

4. A composition according to any preceding claim wherein the additive particles contain from 0.5 to 40 wt.% calcium oxide, preferably from 5 to 30 wt.%, e.g. from 10 to 25 wt.%.

5. A process for fluid catalytic cracking of a petroleum fraction containing vanadium contaminant, in which there is used as catalyst a composition according to any preceding claim.

6. A process according to claim 5 wherein the catalyst composition contains at least 10 moles, preferably at least 30 moles, of calcium oxide per mole of vanadium contaminant in the petroleum fraction feed.

FIG. I

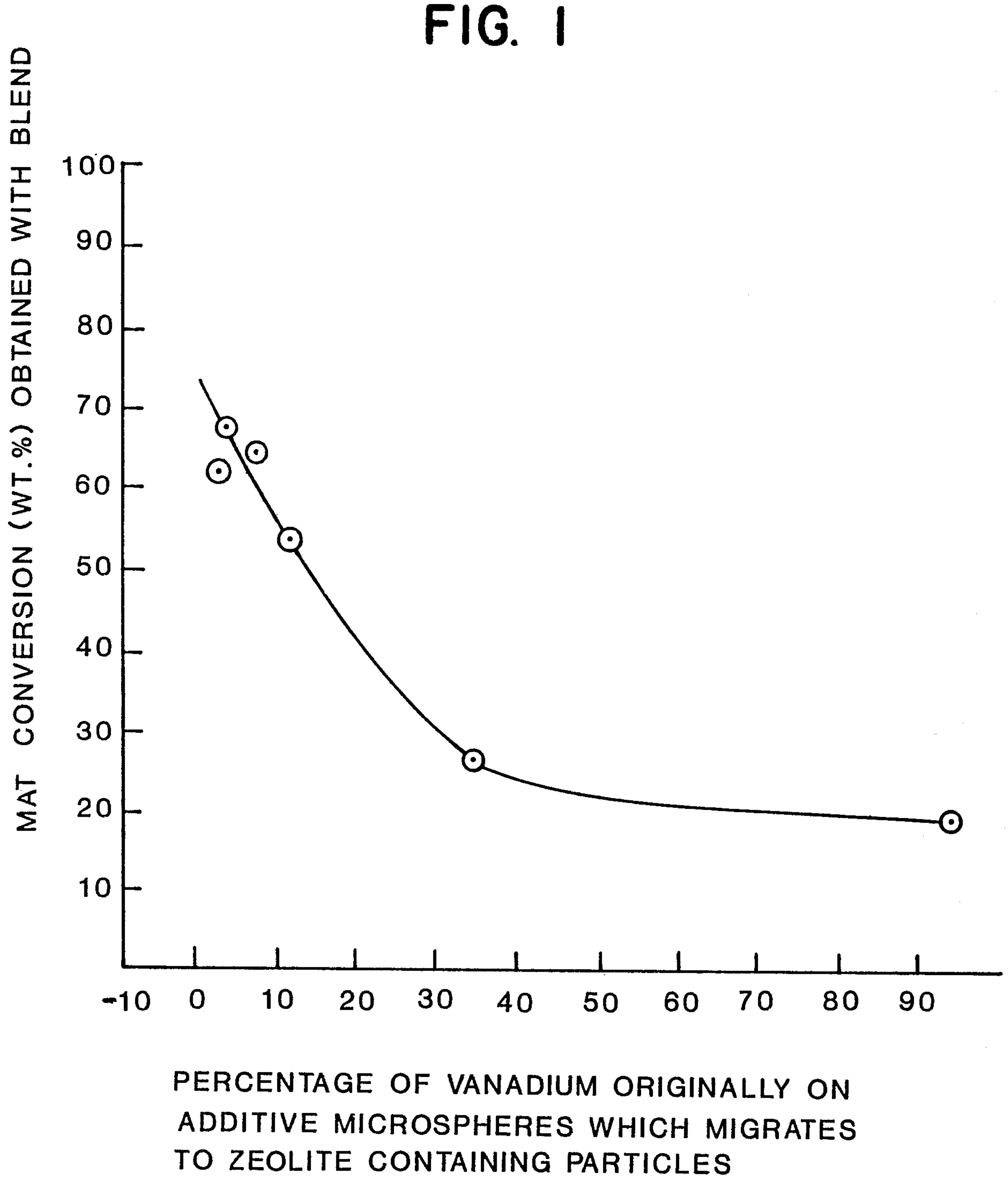
MAT CONVERSION (WT.%) OBTAINED WITH BLEND
100
90
80
70
60
50
40
30
20
10
-10
0
10
20
30
40
50
60
70
80
90
PERCENTAGE OF VANADIUM ORIGINALLY ON
ADDITIVE MICROSPHERES WHICH MIGRATES
TO ZEOLITE CONTAINING PARTICLES